# EUROPEAN PATENT APPLICATION

(11) **EP 3 361 100 A1**
(43) Date of publication of application: **15.08.2018**
(21) Application number: 16846931.0
(22) Date of filing: 19.09.2016
(51) Int. Cl.: F04C 29/00, F16C 19/10, F16C 33/38, F16C 19/26, F04C 18/02

(54) **SCROLL FLUID MACHINE HAVING ORBITING SCROLL ROLLING SUPPORT MEMBER**

(30) Priority: 18.09.2015 KR 20150132644
(71) Applicant: Yoon, Jeen Mok, Bupyeong-gu, Incheon 21335 (KR)
(72) Inventor: Yoon, Jeen Mok, Bupyeong-gu, Incheon 21335 (KR)
(74) Representative: Angerhausen, Christoph
(86) International application number: PCT/KR2016/010433
(87) International publication number: WO 2017/048110

(57) **Abstract**

The present invention provides a scroll fluid machine comprising a fixed scroll unit 100, an orbiting scroll unit 200, a main frame 300 having three bearings 312, 322 and 332 disposed corresponding to the three bearings 221a, 221c and 221c of the orbiting scroll unit 200, a power transmission shaft 310 coupled to the bearing 221a of the orbiting scroll unit 200 and the main frame 300; and a pair of opposite rotation preventing shafts 320 and 330, further comprising a rolling support device 400 for the orbiting scroll unit comprised of a plate-shaped retainer cage 410 and a plurality of balls 420 made of a hard material and rollably accommodated in the accommodation holes 430 of the plate-shaped retainer cage 410 and disposed between the orbiting scroll unit 200 and the main frame 300, and a means for guiding rolling of the balls of the rolling support device 400, thereby decreasing the abrasion of the contact surface of the orbiting scroll unit with the rolling support device and the contact surface of the main frame with the rolling support device, restraining deformation of the orbiting scroll unit caused by the pressure of a working fluid, extending the life span of the scroll fluid machines to provide many economical advantages, and making it possible to improve the thermal efficiency of the machine by making the machine with stainless steel which has low heat transfer coefficients and does not need extra corrosion resistance treatment leading to the problem of possible increase of geometric tolerance of the material.

## Description

### [Technical Field]

The present invention relates to scroll fluid machines used in refrigerant compressors, air compressors, turbine expanders, and the like, and more particularly, to scroll fluid machines, comprised of an orbiting scroll unit and a main frame to which the orbiting scroll unit is attached and provided with a rolling support device for the orbiting scroll unit having a plate-shaped retainer cage having balls made of hard materials and rollably disposed between the front surface of the main frame supporting the orbiting scroll unit against a fixed scroll unit and the front surfaces of the main frame, designed to reduce the frictional resistances between the rolling support device and the orbiting scroll unit and between the rolling support device and the main frame, thereby decreasing the abrasion of the surfaces of the orbiting scroll unit and the main frame in contact with the rolling support device, restraining the deformation of the orbiting scroll unit caused by the pressure of a working fluid, and extending the life span of the scroll fluid machines to provide many economical advantages.

### [Background Art]

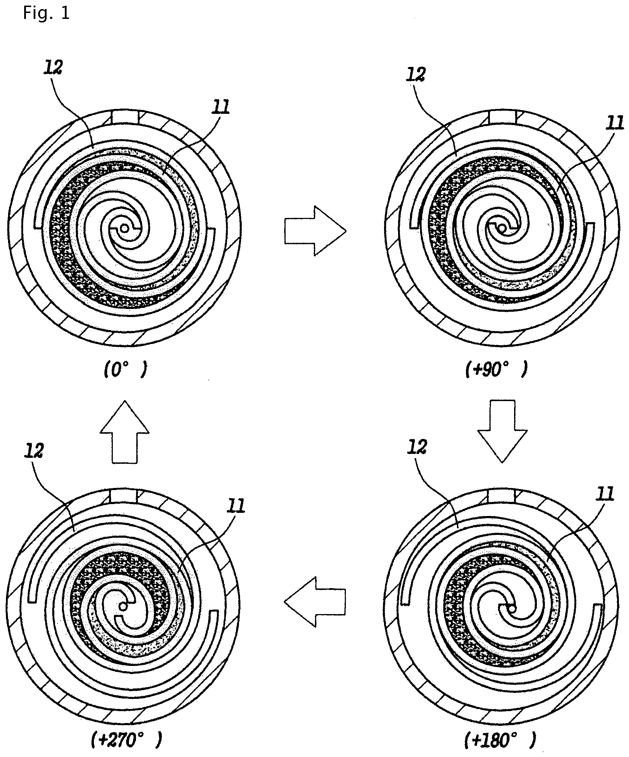

Conventional scroll fluid machines, which obtain power from expansion of a fluid or compress the fluid by means of power, comprise, as shown in FIG.1, a fixed scroll unit 11 having a fixed scroll wrap and an orbiting scroll unit 12 having an orbiting scroll wrap having a shape corresponding the shape to the fixed scroll wrap of the fixed scroll unit 11 and being engagedly coupled to the fixed scroll unit 11 with a phase difference of 180° from one another. Accordingly, a plurality of sealed spaces having crescent sectional shapes are formed by the fixed scroll unit 11 and the orbiting scroll unit 12, and the sealed spaces are enlarged or contracted through the changes in the positions of the orbiting scroll unit, thereby making the working fluid accommodated in the sealed spaces to be expanded or compressed. Further, the orbiting scroll unit 12 is engaged with a rotation preventing means having an Oldham ring or an eccentric shaft structure, and accordingly, even though the orbiting scroll unit 12 is revolved, it can maintain the coupled state with the fixed scroll unit 11.

Accordingly, in a compression type scroll fluid machine, the orbiting scroll unit 12 is revolved in a clockwise direction, and the fluid introduced through an inlet port formed on the periphery of a base plate of the fixed scroll unit is compressed and discharged, as the sealed spaces having the crescent sectional shapes, in which the fluid is accommodated, are contracted. On the contrary, in an expansion type scroll fluid machine, the orbiting scroll unit 12 is revolved in a counterclockwise direction, and the fluid introduced through an inlet port formed at the center of the substitute of the fixed scroll unit 11 becomes expanded and discharged to the outside, as the sealed spaces having the crescent sectional shapes, in which the fluid is accommodated, are enlarged.

That is, in the scroll fluid machines, the sealed spaces having the crescent sectional shapes, which are formed between the fixed scroll wrap of the fixed scroll unit 11 and the orbiting scroll wrap of the orbiting scroll unit 12, are contracted or enlarged in accordance with the orbiting directions of the orbiting scroll unit 12, and accordingly, the scroll fluid machines are applied to air or refrigerant compressors and turbine expanders. Such scroll fluid machines can perform strokes of introduction or suction, expansion or compression, and discharge of a working fluid at the same time, and as a result, torque variations upon the rotation of a power transmission shaft are relatively small, thereby generating low noise and vibration. Further, scroll fluid machines have a relatively simpler configuration than reciprocating compressors, thereby needing a small number of parts to provide many economical advantages and making it easy to be small-sized in structure and light in weight.

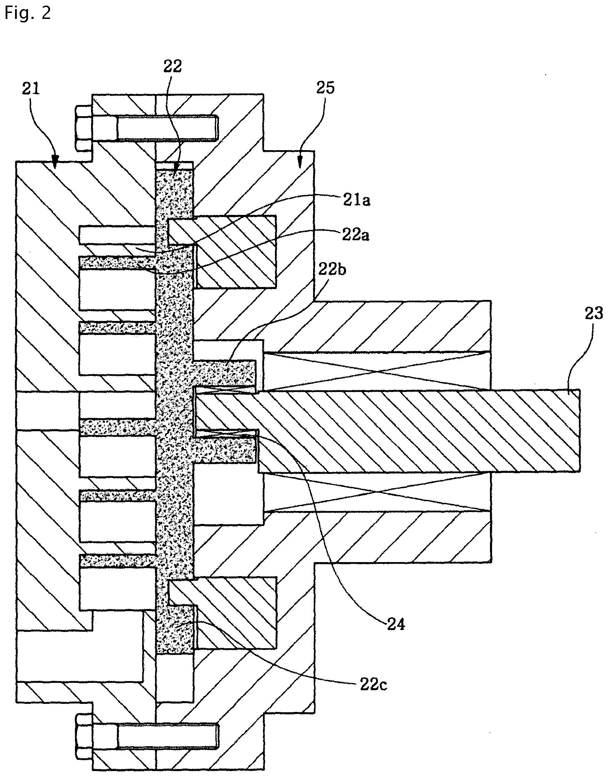

On the other hand, conventional scroll fluid machines, as can be seen from FIG.2 showing an example thereof, have a configuration, wherein an orbiting scroll unit 22 is revolved around the center point being eccentric from the center of a fixed scroll unit 21 in the state where a fixed scroll wrap 21a of the fixed scroll unit 21 is engagedly coupled to an orbiting scroll wrap 22a of the orbiting scroll unit 22, thereby varying the positions of the orbiting scroll wrap and volumes of the spaces having crescent sectional shapes formed between the fixed scroll unit 21 and the orbiting scroll unit 22. As the scroll fluid machine is operated, the pressure of a working fluid becomes high against the center parts of the base plates 21c and 22c of the fixed scroll wrap 21a and the orbiting scroll wrap 22a, while it is lowered on the periphery thereof. In addition, a boss 22b, disposed on the periphery of the base plate 22c of the orbiting scroll unit 22, has a bearing 24 embedded therein to hold a power transmission shaft 23. In such a structure, the boss 22b is also revolved, as the orbiting scroll unit 22 is revolved. There is provided a space on the front surface of a main frame 25 so that the boss 22b may revolved therein, and the orbiting scroll unit 22, supported against the main frame 25, is revolved by the power transmission shaft 23 being rotated by an external driving force, so that the working fluid is compressed and then supplied as a high pressure working fluid. Otherwise, the orbiting scroll unit 22 is orbiting by a high pressure working fluid introduced from outside and thus rotates the power transmission shaft 23 so that an external rotating device is driven and the expanded working fluid is discharged. These structures are known in the art.

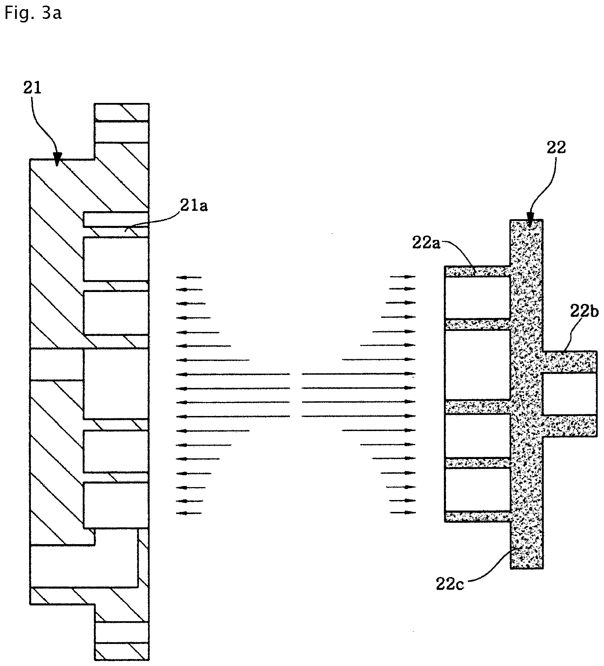

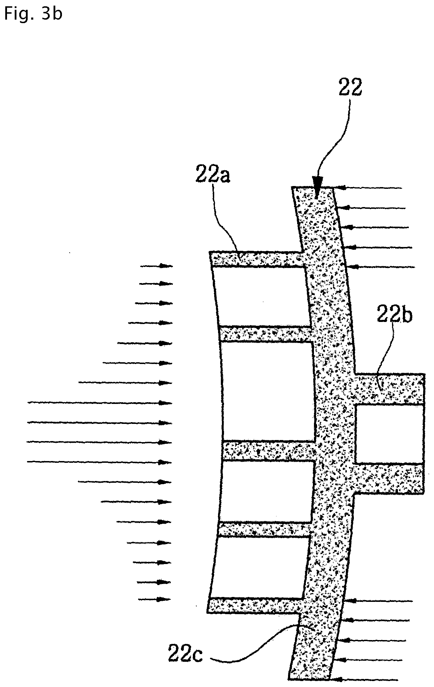

In the conventional scroll fluid machines, as shown in FIG.3a and FIG. 3b, since the fixed scroll unit 21 and the orbiting scroll unit 22 are under the pressure of the working fluid, the orbiting scroll unit 22, particularly the base plate 22c is forced to be deformed, widening gaps between the fixed scroll unit 21 and the orbiting scroll unit 22 and between the fixed scroll wrap 21a and the orbiting scroll wrap 22a. The gaps widened as above will lead to leakage of the working fluid over an allowable value, as the working fluid is compressed or expanded by the operation of the scroll fluid machines, thereby undesirably decreasing the efficiency of the scroll fluid machines.

Moreover, the periphery of the base plate 22c of the orbiting scroll unit 22, in tight contact with the main frame 25, shall frictionally slides against the main frame 25, thereby causing undesired abrasion of the periphery of the outer surface of the base plate 22c of the orbiting scroll unit 22 and the opposite front surface of the main frame 25.

In order to solve the above-mentioned problems, various abrasion reduction methods have been used, wherein the outer surface of the base plate 22c of the orbiting scroll unit 22 and the front surface of the main frame 25 are changed in shape and new materials are employed for making the orbiting scroll unit 22 and the main frame 25.

A scroll expander of the Korean Patent Application Laid-open No. 10-2014-0104296 (August 28, 2014), as shown in FIG.4a, has not any means for reducing the frictional resistance between an orbiting scroll 41a and a housing 42a, while a power generating system with a scroll expander using a heat source of a bio-fuel of the Korean Patent No. 10-1314525 (October 4, 2013), as shown in FIG.4b, uses grease as means for reducing the frictional resistance between an orbiting scroll 41b and a main frame 42b.

In the conventional scroll machines, including the above two inventions, a lubricant oil supply means is disposed between the orbiting scroll 41a and the housing 42a or between the orbiting scroll 41b and the main frame 42b to reduce the frictional resistance therebetween, but operation of the scroll machines for a certain period of time with a high pressure working fluid applied, the lubricant oil may not function well as desired, thereby lowering the efficiency of the scroll fluid machine.

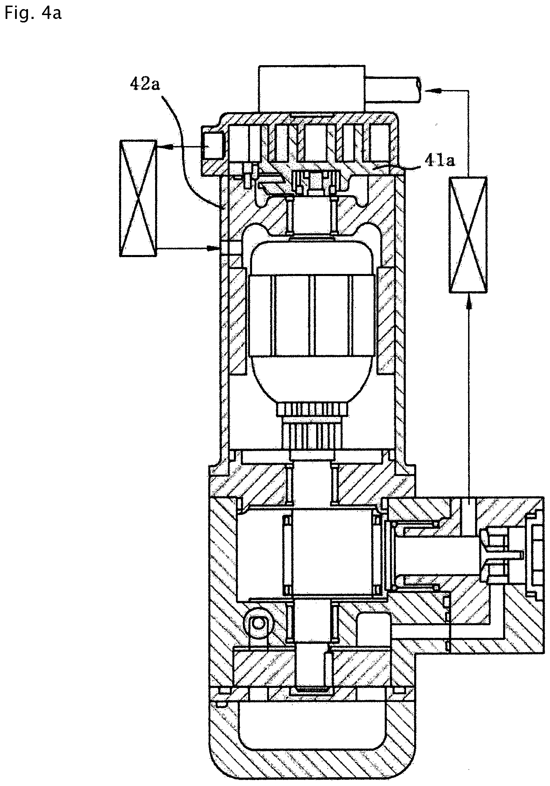

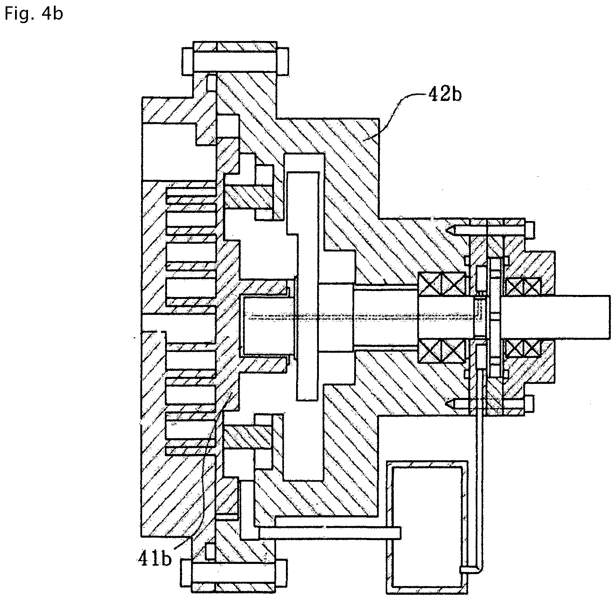

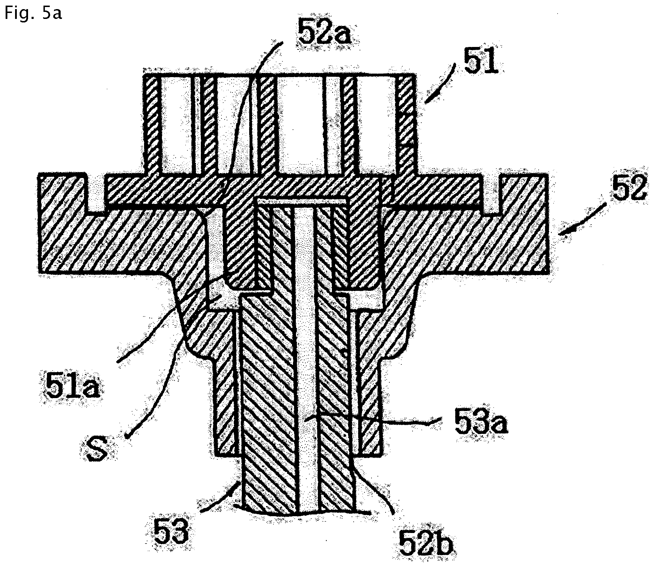

Unlike the scroll expanders in the above two prior arts as shown in FIGS.4a and 4b wherein kinetic energy is generated from the high pressure fluid, a scroll compressor for compressing air by means of electric power, which is disclosed in the Korean Patent No. 10-0202624 (June 15, 1999), has a configuration, in which, as shown in FIG.5a, an orbiting scroll 51 corresponding to a fixed scroll(not shown) is seated on an upper frame 52 and a crank shaft 53 fitted to a through hole 52a of the upper frame 52 is coupled to a compressor boss 51a of the orbiting scroll 51, so that oil introduced through an oil passage 53a passing through the crank shaft 53 may flow through a boss space portion S and an oil guide portion 52b to reduce the friction between the upper frame 52 and the orbiting scroll 51 orbiting with respect to the upper frame 52.

Further, another example of the scroll compressors, which is disclosed in the Korean Patent No. 10-0296696 (October 24, 2001), configured, as shown in FIG.5b, to have a fixed scroll 21 having a base plate 21a and a fixed scroll wrap 21b and an orbiting scroll 22 having a base plate 22a and an orbiting scroll wrap 22b being seated on a casing 25, and a crank shaft 29 engaged with a driving shaft by means of a bearing 28 being connected to the lower end portion of the orbiting scroll 22, wherein as the orbiting scroll 22 is revolved together with the rotation of the crank shaft 29, the fluid sucked through a suction hole 23 is compressed and discharged through a discharging port 24, comprises further a tin compound containing film, which is not easily peelable and formed on a sliding surface between the orbiting scroll wrap 22b and the fixed scroll wrap 21b for reducing the frictional resistance between the two opposing wraps and enhancing the efficiency of the scroll compressor.

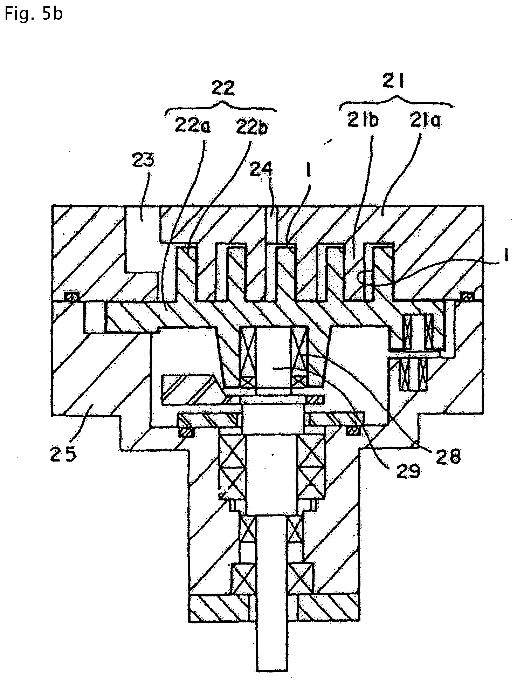

The lubricant oil or the film of tin compound of scroll compressors described above may reduce the frictional resistance on the sliding surface between the upper frame 52 and the orbiting scroll 51 as shown in FIG.5a or between the fixed scroll 21 and the orbiting scroll 22 as shown in FIG.5b, but since the pressure of the working fluid is very high, there are limitations in preventing the abrasion of the sliding surfaces of the scroll compressors and the deformation of the orbiting scroll 51 or 22.

Particularly, the scroll expanders that are operated to expand gas for generating power should keep operating for a longer period of time than the scroll compressors, resulting in the increased abrasion of the sliding surface between the housing 42a and the orbiting scroll 41a as shown in FIG.4a and between the main frame 42b and the orbiting scroll 41b as shown in FIG.4b.

Further, the scroll unit is generally made of aluminum having good machinability, and in case of the compression type scroll fluid machines, the high heat diffusion of the aluminum in the process of polytropic compression of the working fluid contributes to enhancement of compression efficiency of the working fluid. In case of the expansion type scroll fluid machines, to the contrary, the aluminum materials have the problems, for example, increment of heat loss in the process of polytropic compression of the working fluid due to the high heat diffusion of the aluminum adversely affects and lowers the expansion efficiency of the working fluid, and a secondary processing of the aluminum for imparting the corrosion resistance is hard to be done without affecting the precision accuracy of the aluminum.

### [Description of Invention]

### [Technical Problems]

The present invention has been made in view of the above-described problems in the prior arts, and it is an object of the present invention to provide scroll fluid machines comprising a fixed scroll unit with its scroll wrap, an orbiting scroll wrap with its scroll wrap and a main frame, wherein deformation of the orbiting scroll unit, to be caused by unbalanced distribution of force of the pressure of a working fluid, i. e. high pressure applied on the center part of the orbiting scroll unit and low pressure applied on the outer periphery thereof, may be prevented and thus, minute gaps between contact parts of the two opposite scroll wraps of the fixed scroll unit and the orbiting scroll unit, the edge of the scroll wrap of the orbiting scroll unit and bottom of the fixed scroll unit, and the edge of the scroll wrap of the fixed scroll unit and bottom of the orbiting scroll unit may also be prevented from being widened or growing with the result of prevention of leakage increase of the working fluid leak through the minute gaps as above. This object can be achieved by adopting a rolling support device for the orbiting scroll unit disposed between the main frame and the orbiting scroll unit. The rolling support device for the orbiting scroll unit further serves to reduce friction between the main frame and the orbiting scroll unit, thereby extending the life span of the scroll fluid machine, improving the efficiency of the scroll fluid machine with many economical advantages which are incidental to such improvement.

It is another object of the present invention to provide an expansion type scroll fluid machine, by which the problems such as increase of geometric tolerance of its fixed scroll unit, orbiting scroll unit and main frame, and heat loss in the polytropic expansion process of a working fluid may be avoided with the enhanced working efficiency, by making those parts by stainless steel such as SUS 303F, SUS 430F, and the like.

### [Technical Solution]

The present invention, created to accomplish the above described objects, provides a scroll fluid machine comprising; a fixed scroll unit having an inlet port and an outlet port for a working fluid and a fixed scroll wrap formed on one surface of a base plate thereof; an orbiting scroll unit having an orbiting scroll wrap formed on the center part of one surface of a base plate thereof, the orbiting scroll wrap having a shape corresponding to the fixed scroll wrap to be facingly engaged with the fixed scroll wrap with a phase difference of 180° with respect to the fixed scroll wrap, and three protruding wings with their respective bearing housings having a bearing therein, that is, two opposite bearing housings and an intermediate bearing housing; a main frame whose front surface coupled to the other or outer surface of the base plate of the orbiting scroll unit and having two opposite bearings and one intermediate bearing disposed corresponding to the three bearings of the orbiting scroll unit; a power transmission shaft having an eccentric pin end rotatably coupled to the intermediate bearing of the orbiting scroll unit and a body rotatably coupled to the intermediate bearing of the main frame; and two rotation preventing shafts having an eccentric pin end thereof rotatably coupled to one of the two opposite bearings of the orbiting scroll unit and a body rotatably coupled to one of the two opposite bearings of the main frame; further comprising a rolling support device for the orbiting scroll unit having a plate-shaped retainer cage having a plurality of accommodation holes distributedly formed thereon and a plurality of balls made of a hard material and rollably accommodated in the accommodation holes of the plate-shaped retainer cage and disposed between the orbiting scroll unit and the main frame; and a means for guiding or conducting rolling of balls in the rolling support device, disposed between the orbiting scroll unit and the main frame.

According to an aspect of the present invention, the scroll fluid machine may be an expansion type scroll fluid machine, the fixed scroll unit, the orbiting scroll unit and the main frame of which are made of stainless steel such as SUS 303F, SUS 430F, and the like, being appropriate for casting of the above parts, which has low heat transfer coefficients, but does not require corrosion resistance treatment which may cause increment of geometric tolerance of the treated materials.

According to another aspect of the present invention, the scroll fluid machine may comprise further a pair of circular mirror surfaced racing plates disposed between the rolling support device and the orbiting scroll unit and between the rolling support device and the main frame, respectively.

According to another aspect of the present invention, the scroll fluid machine may comprise further a plurality of tension springs with both ends thereof fixed to the outer circumference side of the base plate of the orbiting scroll unit and the front surface of the main frame so as to fix the orbiting scroll unit and the main frame tightly together.

According to still another aspect of the present invention, both ends of each of the tension springs are fixed to a spring hook bracket formed on the outer circumference side of the base plate of the orbiting scroll unit and to a spring hook bolt fastened to a bolt hole formed on the front surface of the main frame facing the rolling support device, respectively.

According to still another aspect of the present invention the means for guiding or conducting the balls' rolling of the rolling support device(hereinsfter called "rolling guide means") may comprise four guides having guide grooves formed along the outer circumference of the plate-shaped retainer cage to have a right angle with respect to the neighboring guides in a diametric direction of the plate-shaped retainer cage; four guide protrusions formed along the outer circumference of the orbiting scroll unit and having a through hole respectively formed on the positions corresponding to the guide grooves in a perpendicular direction to the guide grooves, the guide protrusions being inserted in the guide grooves of the four guides to be reciprocated toward the outer circumference of the plate-shaped retainer cage from the center thereof; four rods inserted in the through holes of the four guide protrusions; and eight supports disposed on the front surface of the main frame to support both ends of each of the four rods.

According to still another aspect of the present invention, in the above-described rolling guide means as an Oldham rolling guide means, each of the four guide protrusions, formed along the outer circumference of the plate-shaped retainer cage, may be arranged to have two coil springs fitted to the outer surface of the rod to have both ends thereof, meeting and coming into contact with either side of the guide protrusion and the support and thus, making a cross of the guide protrusion and the spring.

According to still another aspect of the present invention, the rolling guide means may be an eccentric shaft type guide means comprising two guides protruding from the outer circumference of the plate-shaped retainer cage and having a bearing housing in which a bearing is disposed, and two guide shafts, formed between the bodies and the eccentric pins of the rotation preventing shafts and coupled to the bearings of the bearing housings of the two guides, so that the rolling support device is orbiting, while the revoluttion of the rolling support device is being prevented by the rotation preventing shafts.

According to still another aspect of the present invention, the plate-shaped retainer cage of the rolling support device may comprise two thin plates fixedly attached to each other, each of the two thin plates being provided with a plurality of separate accommodation holes formed by pairs of arc-shaped ball caster housing halves, facing each other, formed by punch press machining or injection molding. Otherwise, the plate-shaped retainer cage of the rolling support device may have a pair of two thick plates fixedly attached to each other to provide a plurality of separate accommodation holes formed by pairs of arc-shaped ball caster housing halves, made by cutting operation thereof. Alternatively, the plate-shaped retainer cage of the rolling support device may comprise one single plate provided with a plurality of separate accommodation holes having opposing pairs of prongs extending outwardly and downwardly in the opposite directions. In addition, the plate-shaped retainer cage of the rolling support device may be configured to comprise one single plate provided with a plurality of openings formed with arc-shaped recesses facing each other, and a plurality of pairs of holding caps rollably holding a ceramic ball therebetween, each of which is inserted and fixed in the respective opening.

According to still another aspect of the present invention, the plate-shaped retainer cage of the rolling support device may have a non-contact portion in the center part thereof, without any accommodation hole or with circular or polygonal perforation formed thereon, so that the portion does not make contact with the main frame and the orbiting scroll unit.

### [Effects of Invention]

The present invention can provide scroll fluid machines, by which deformation of the orbiting scroll unit, to be caused by unbalanced distribution of force of the pressure of a working fluid, i.e. higher pressure applied on the center part of the orbiting scroll unit and lower pressure applied on the outer periphery thereof, and possible growth or increase of minute gaps between contact parts of the two opposite scroll wraps of the fixed scroll unit and the orbiting scroll unit, the edge of the scroll wrap of the orbiting scroll unit and the bottom of base plate of the fixed scroll unit, and the edge of the scroll wrap of the fixed scroll unit and the bottom of the base plate the orbiting scroll unit may be prevented, thereby reducing friction between the main frame and the orbiting scroll unit, restraining possible increase of leak of the working fluid through the gaps, improving the efficiency of the scroll fluid machines, and extending the life span of the scroll fluid machines with many economic advantages.

It is also possible by the present invention to provide more efficient expansion type scroll fluid machines with its fixed scroll unit, orbiting scroll unit and main frame made of stainless steel such as SUS 303F, SUS 430F, and the like, by which the problems of the conventional scroll fluid machines made of aluminum, for example, difficulties in maintaining and controlling the precision requirement of the scroll units and the main frame made of aluminum, which should be subjected to the corrosion resistance treatment as a secondary processing thereof, and heat loss in the polytropic expansion process of a working fluid contacting the aluminum materials, are solved.

### [Description of Drawings]

FIG.1 is a schematic view showing an operating principle of a typical scroll fluid machine.
FIG.2 is a sectional view showing a conventional scroll fluid machine.
FIGS.3a and 3b are sectional views showing the states where a fluid pressure is applied to a fixed scroll unit and an orbiting scroll unit of the scroll fluid machine of FIG.2 and the deformed state of the orbiting scroll unit due to the unbalanced application of the fluid pressure.
FIGS.4a and 4b are sectional views showing a conventional scroll expander.
FIGS.5a and 5b are sectional views showing a conventional scroll compressor.
FIG.6 is an exploded perspective view showing an expansion type scroll fluid machine having a rolling support device for the orbiting scroll unit according to an embodiment of the present invention.
FIG.7 is a sectional view showing main parts of the expansion type scroll fluid machine of FIG.6.
FIG.8 is a partially enlarged perspective view showing tension springs for tightly fixing an orbiting scroll unit and a main frame of the expansion type scroll fluid machine of FIG.6.
FIGS.9 and 10 show respectively a side view of an Oldham type rolling guide means and an exploded perspective view of an eccentric shaft type rolling guide means for guiding the balls' rolling of the rolling support device of FIG.6.
FIGS.11 and 12 show exploded perspective views of two Oldham ring type rolling support devices of the expansion type scroll fluid machine of FIG.6.
FIGS. 13 and 14 are sectional views of two variations of the rolling support devices of the expansion type scroll fluid machine of FIG.6.
FIGS.15 and 16 are sectional views showing other variations of the rolling support devices of the expansion type scroll fluid machine of FIG.6.
FIGS. 17 to 20 are side views showing the operating steps of the expansion type scroll fluid machine according to the present invention.

### [Best Mode for Practicing Invention]

Hereinafter, scroll fluid machines comprising a rolling support device according to the present invention will be described in detail with reference to the attached drawings.

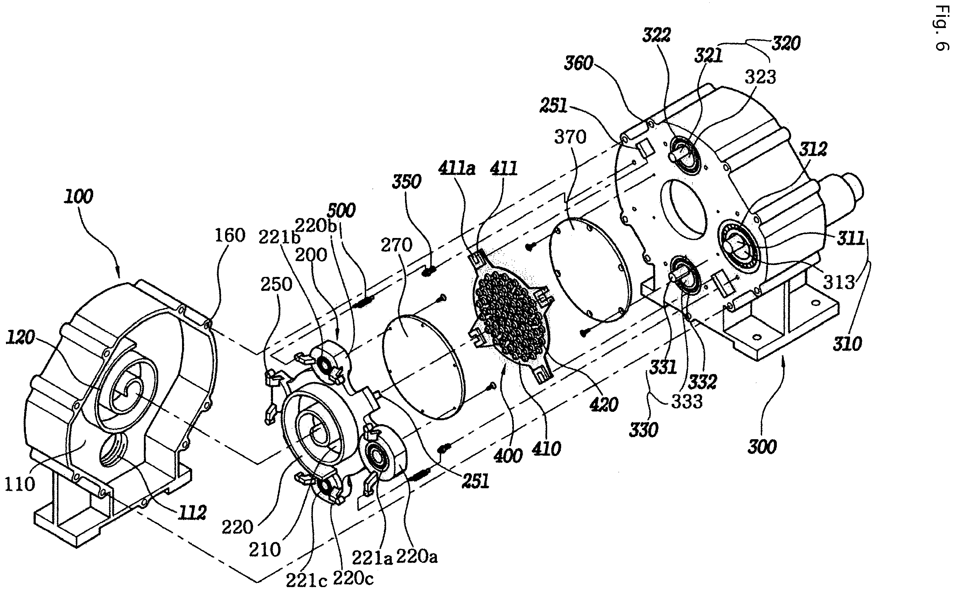

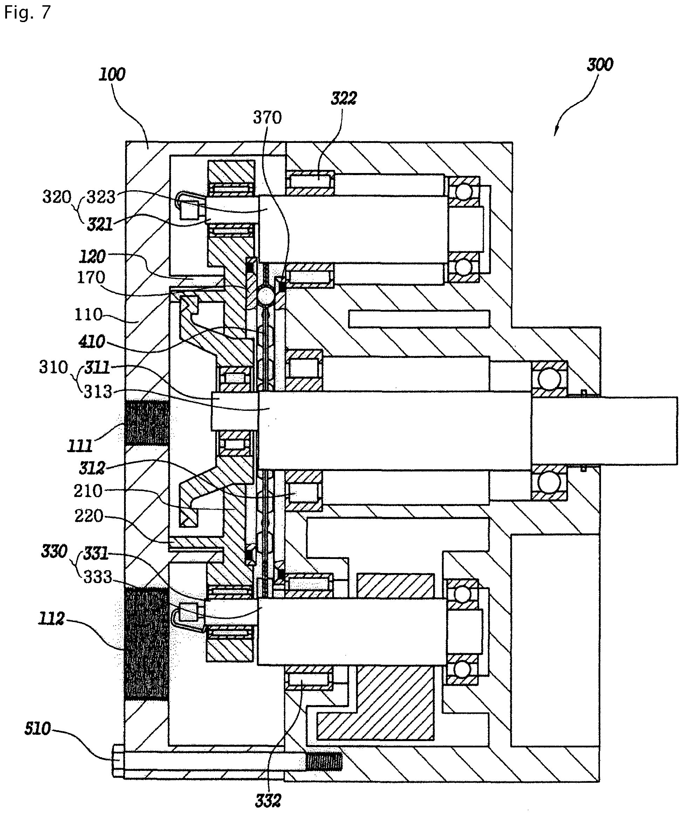

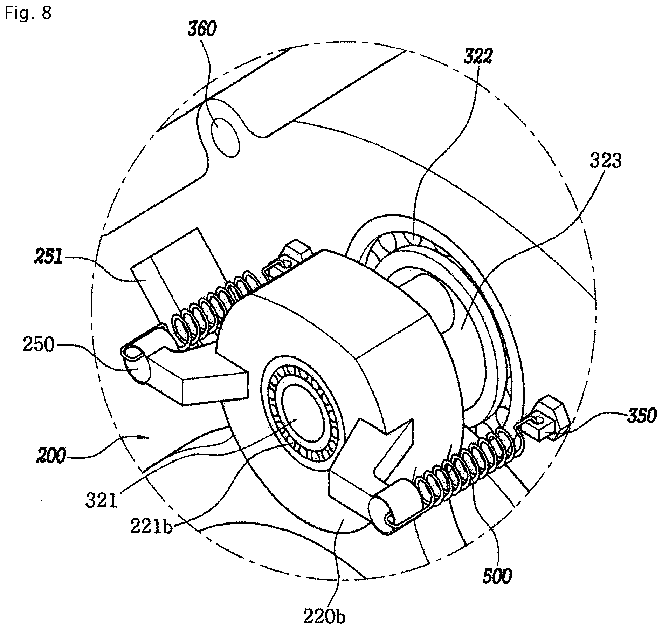

FIG.6 is an exploded perspective view showing an expansion type scroll fluid machine having a rolling support device for an orbiting scroll unit according to an embodiment of the present invention, FIG.7 is a sectional view showing the main parts of the expansion type scroll fluid machine of FIG. 6, and FIG.8 is a partially enlarged perspective view the tension springs for tightly fixing the orbiting scroll unit and a main frame of the expansion type scroll fluid machine of FIG. 6.

As shown in FIGS.6 to 8, an expansion type scroll fluid machine according to an embodiment of the present invention comprises a fixed scroll unit 100 having a fixed scroll wrap 120 formed on one surface of a base plate 110, an orbiting scroll unit 200 having an orbiting scroll wrap 220 having a shape corresponding to the fixed scroll wrap 120 to be engaged with the fixed scroll wrap 120 with a phase difference of 180° with respect to the fixed scroll wrap 120 to form spaces of crescent sectional shapes. a main frame 300, a power transmission shaft 310, a pair of rotation preventing shafts 320 and 330, and a rolling support device 400 for the orbiting scroll unit, wherein the parts except the rolling support device 400 are known in the art.

The fixed scroll unit 100 has an inlet port 111 and an outlet port 112 for introducing and discharging a high pressure working fluid therethrough, and the fixed scroll wrap 120 formed on one surface os the base plate thereof to make internal spaces for accommodating the orbiting scroll wrap 220 of the orbiting scroll unit 200. The inlet port 111 into which the high pressure working fluid is introduced is formed on the center part of the base plate 110 of the fixed scroll unit 100 to be in fluid communication with an external working fluid supply source, and the outlet port 112 from which the expanded working fluid is discharged is formed on the outer periphery of the base plate 110 of the fixed scroll unit 100 to be in communication with the outside.

The orbiting scroll unit 200 has the orbiting scroll wrap 220 formed on the center part of one surface of a base plate thereof 210 to be facingly engaged with the fixed scroll wrap 120 with the phase difference of 180° with respect to the fixed scroll wrap 120 and three protruding wings, i.e., two opposite bearing housings 220b and 220c and an intermediate bearing housing 220a with their respective bearing 221b, 221c and 221a held therein, so that the orbiting scroll unit 200 is forced to be orbited together with the power transmission shaft 310 by the pressure of the high pressure working fluid introduced therein through the inlet port 111 of the fixed scroll unit 100, and thus, making the working fluid to be expanded and discharged.

The protruding wings 220a, 220b and 220c, which are provided on the outer circumference of the base plate 210 of the orbiting scroll unit 200 having the orbiting scroll wrap 220 thereon, are arranged to allow the two opposite protruding wings 220b and 220c and the intermediate protruding wing 220a to have a right angle with each other and with the center of the revolution.

The main frame 300 is provided with three bearings 312, 322 and 332 disposed on the front surface thereof at the positions corresponding to the three bearings 221a, 221b and 221c of the orbiting scroll unit 200 to hold a body 313 of the power transmission shaft 310 and respective bodies 323 and 333 of the two rotation preventing shafts 320 and 330 therein, so that the body 313 of the power transmission shaft 310, formed with an eccentric pin 311 on its front end to be rotatably fixed to the bearing 221a of the orbiting scroll unit 200, is rotatably fitted to the bearing 312, while the bodies 323 and 333 of the two rotation preventing shafts 320 and 330, formed with eccentric pin 321 and 331 on their front ends to be rotatably fixed to the bearings 221b and 221c of the orbiting scroll unit 200, are rotatably coupled to the two bearings 322 and 332.

In the above structure that the three eccentric pins 311, 321 and 331 formed integrally with the bodies 313, 323 and 333 of the power transmission shaft 310 and the two rotation preventing shafts 320 and 330, the vectorial force caused by the pressure of the working fluid introduced through the inlet port 111 is applied to the orbiting scroll wrap 220, and the summation of the vectorial force is applied to the eccentric center of the orbiting scroll unit 200 via the centroid of figure with a force F kgf. As a result, the orbiting scroll unit 200 is orbiting with respect to the centers of the bodies 313, 323 and 333 of the power transmission shaft 310, and rotation preventing shafts 320 and 330, thereby rotating the power transmission shaft 310 with the rotation torque T = R cm x F kgf (wherein, R cm=eccentricity of each of eccentric pins), generated through the orbiting movement to drive an external rotating device(power generator, etc.), while the rotation of the eccentric piss 320 and 330 is prevented by the two rotation preventing shafts 320 and 330 to avoid the collision between the orbiting scroll wrap 220 being orbited and the fixed scroll wrap 120.

The rolling support device 400 for the orbiting scroll unit 200 comprises a plate-shaped retainer cage 410 made of aluminum and having a plurality of accommodation holes 430 spaced apart from each other and a number of ceramic balls 420 corresponding to the number of accommodation holes 430 rollably accommodated in the accommodation holes 430 of the plate-shaped retainer cage 410. The rolling support device 400 is disposed between the outer surface of the base plate 210 of the orbiting scroll unit 200 and the front surface of the main frame 300. The plurality of rolling ceramic balls 420 are always brought into close contact with the outer surface of the base plate 210 of the orbiting scroll unit 200 and the front surface of the main frame 300, so that the orbiting scroll unit 200 is orbiting, making outer surface of the base plate 210 to be supported against the plurality of rolling ceramic balls 420 rollably accommodated in the plate-shaped retainer cage 420, and accordingly, the rolling support action by means of the rolling support device 400 provided with the ceramic balls 420 makes almost no frictional resistance between the outer surface of the base plate 210 of the orbiting scroll unit 200 and the front surface of the main frame 300. Further, as the pressure of the working fluid is applied to the orbiting scroll unit 200, the plurality of ceramic balls 420 provide multi-point supports to the outer surface of the base plate 210 of the orbiting scroll unit 200 against the main frame 300 with the different degrees of pressures of the working fluid according to their positions on the plate-shaped retainer cage 410, thereby preventing the base plate 210 of the orbiting scroll unit 200 from being deformed due to the high pressure of the working fluid.

The rolling support device 400 for the orbiting scroll unit 200 comprises a plate-shaped retainer cage 410 made of aluminum and having a plurality of accommodation holes 430 spaced apart from each other and a number of ceramic balls 420 corresponding to the number of accommodation holes 430 rollably held in the accommodation holes 430 of the retainer cage 410.

The rolling support device 400 is disposed between the outer surface of the base plate 210 of the orbiting scroll unit 200 and the front surface of the main frame 300. The plurality of rollable ceramic balls 420 of the rolling support device 400, which supports and presses the outer surface of the orbiting scroll unit 200, are in close contact with the outer surface of the base plate 210 of the orbiting scroll unit 200 against the front surface of the main frame 300, so that the orbiting scroll unit 200 is revolved, making almost no frictional resistance between the other surface of the base plate 210 of the orbiting scroll unit 200 and the front surface of the main frame 300. Further, when the pressure of the working fluid is applied to the orbiting scroll unit 200, the plurality of ceramic balls 420 apply multi-point supports to the other surface of the base plate 210 of the orbiting scroll unit 200 against the main frame 300 with the different degrees of pressures of the working fluid according to their positions on the plate-shaped retainer cage 410, thereby preventing the base plate 210 of the orbiting scroll unit 200 from being deformed due to the high pressure of the working fluid.

The rolling support device 400 is fastened by means of bolts 510 to a plurality of fastening holes 160 and 360 formed linearly along the outer peripheral surface of the base plate 110 of the fixed scroll unit 100 and along the periphery of the front surface of the main frame 300 in the direction where the fixed scroll unit 100 and the main frame 300 are coupled to each other, and the fixed scroll unit 100 and the main frame 300 are coupled to each other in such a manner as to allow the outer peripheral surface of the base plate 110 of the fixed scroll unit 100 to be brought into contact with the periphery of the front surface of the main frame 300.

The above embodiment of the present invention comprises further a pair of mirror surfaced circular racing plates 270 and 370, which are made of a steel or tungsten carbide with high abrasion resistance to the rolling of the ceramic balls 420 and disposed between one surface of the rolling support device 400 and the outer surface of the base plate 210 of the orbiting scroll unit 200 and between the other surface of the rolling support device 400 and the front surface of the main frame 300 to be fixed to the outer surface of the base plate 210 of the orbiting scroll unit 200 and to the front surface of the main frame 300, thereby reducing the abrasion of the outer surface of the base plate 210 of the orbiting scroll unit 200 and the front surface of the main frame 300 which may be caused by the friction of the surfaces with the rolling support device 400.

In the above embodiment of the present invention, the orbiting scroll unit 200 is forced to be in close contact with and to be elastically supported against the main frame 300 by means of a plurality of tension springs 500 disposed where both ends of each spring 500 are fixed to the outer surface of the base plate 210 of the orbiting scroll unit 200 and the front surface of the main frame 300. As a result, even though the high pressure working fluid for making the orbiting scroll unit 200 to orbit is applied to the spaces between the fixed scroll wrap 120 and the orbiting scroll wrap 220, the outer surface of the base plate 210 of the orbiting scroll unit 200 is maintained as being tightly contacted with the front surface of the main frame 300, thereby reducing the noise caused by the vibrations of the rolling support device 400 and making the scroll fluid machine to perform a quiet and smooth operation with low noise.

Both ends of each tension spring 500 are fixed to a spring hook bracket 250 formed on the outer surface of the base plate 210 of the orbiting scroll unit 200 and to a spring hook bolt 350 fastened to a bolt hole formed on the front surface of the main frame 300 facing the rolling support device 400.

In case that the scroll fluid machine is of a compression type, the scroll fluid machine according to the present invention may be made of a typical material like aluminum, but in case of the expansion type scroll fluid machine according to the present invention, the fixed scroll unit 100, the orbiting scroll unit 200 and the main frame 300 thereof are desirably made of stainless steel such as SUS 303F, SUS 430F, and the like, being appropriate for casting thereof, thereby suppressing generation of the heat loss in the polytropic expansion of the working fluid as well as reducing the cost incurred in the course of transportation, handling and management of the degree of reduction of surface precision accuracy of aluminum material in the course of performing a secondary corrosion resistance treatment thereof.

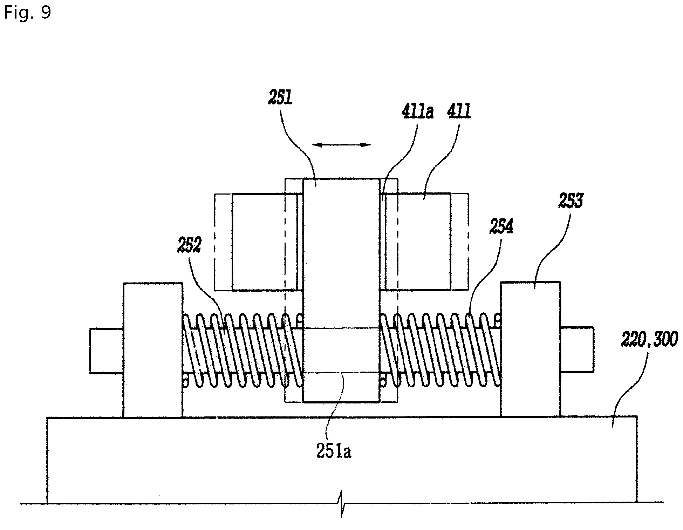

The scroll fluid machine according to the present invention comprises further an Oldham rolling guide means for guiding the balls' rolling of the rolling support device 400, and, as shown in FIGS.6 and 9, the Oldham rolling guide means comprises four guides 411 formed along the outer circumference of the plate-shaped retainer cage 410 and having guide grooves 411a formed in a diametric direction of the plate-shaped retainer cage 410, four guide protrusions 251 formed along the outer circumference of the orbiting scroll unit 200 to be inserted in the guide grooves 411a of the four guides 411 in such a manner as to be reciprocated toward the outer circumference of the plate-shaped retainer cage 410 from the center thereof and having through holes 251a formed on the positions corresponding to the guide grooves 411a in a perpendicular direction to the guide grooves 411a, four rods 252 inserted into the through holes 251a of the guide protrusions 251, and eight supports 253 disposed on the front surface of the main frame 300 to support both ends of the rods 252, whereby the Oldham rolling guide means can provide a stable rolling of the rolling support device 400 onto the orbiting scroll unit 200 and the main frame 300.

The four guides 411 are arranged along the outer circumference of the plate-shaped retainer cage 410, making a cross by two lines connecting the opposite guides, to form an Oldham mechanism, wherein when the orbiting scroll unit 200 is orbiting, the circular motion thereof is divided into motions in the directions of X-axis and Y-axis, thereby inducing stable rolling and orbiting motions of the rolling support device 400. Further, two coil springs 254 are fitted to the outer peripheral surface of each rod 252 to bring both ends thereof into contact with the guide protrusions 251 and the supports 253, providing the guide protrusions 251, moving together with the rolling support device 400, with force of restoration for returning to their original positions.

Further, the guides 411 may be made as separate parts and fixed to the plate-shaped retainer cage 410 by means of fitting or welding, rather than being formed as an integral part of the plate-shaped retainer cage 410. Accordingly, the methods for forming the guides 411 on the plate-shaped retainer cage 410 may be appropriately selected in accordance with the thicknesses or materials of the plate-shaped retainer cage 410.

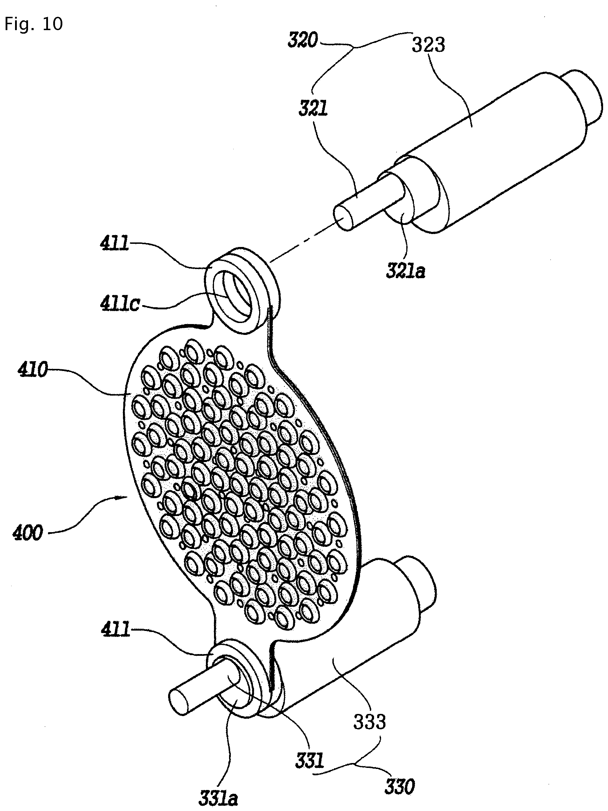

On the other hand, the rolling guide means for guiding the rolling of the rolling support device 400 may be of eccentric shaft type, as shown in FIG.10, comprising; two guides 411 protruding from the outer circumference of the plate-shaped retainer cage 410 to face each other and having a respective bearing 411c; and guide shafts 321a and 331a formed between the eccentric pins 321 and 331 and the bodies 323 and 333 of the rotation preventing shafts 320 and 330 to have an intermediate size between the eccentric pin 321 and 331 and the bodies 323 and 333, so that the eccentric shaft type rolling guide means may guide the rolling of the rolling support device 400.

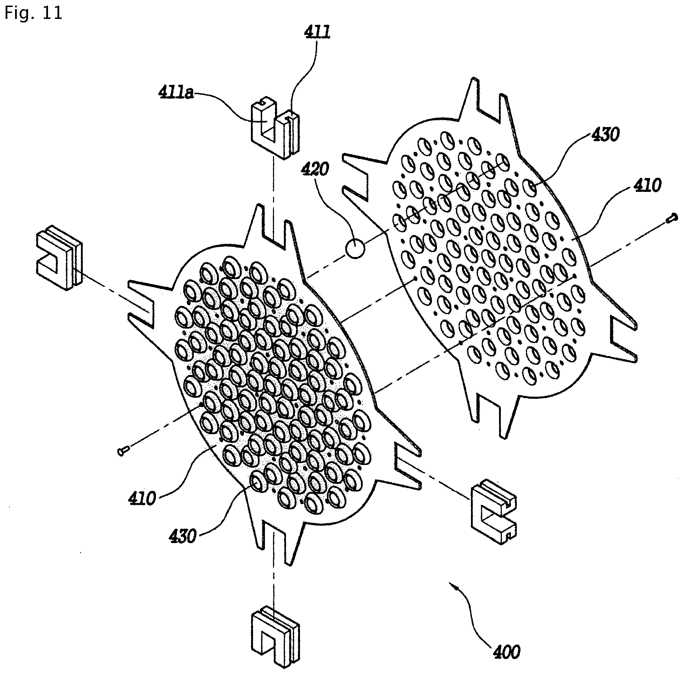

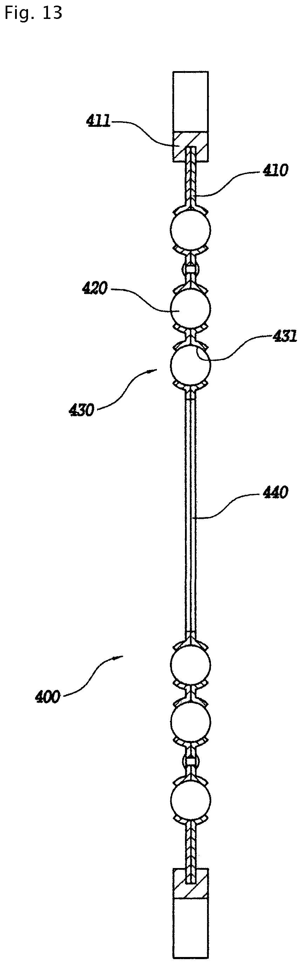

The rolling support device 400 of the scroll fluid machine according to the above embodiment of the present invention, as shown in FIGS. 11 and 13, is configured to comprise two thin plates fixedly attached to each other to form the plate-shaped retainer cage 410. The two thin plates have a plurality of separate circular accommodation holes 430 formed by pairs of arc-shaped ball caster housing halves 431, facing each other, formed by punch press machining or injection molding so that they may be spaced apart from each other.

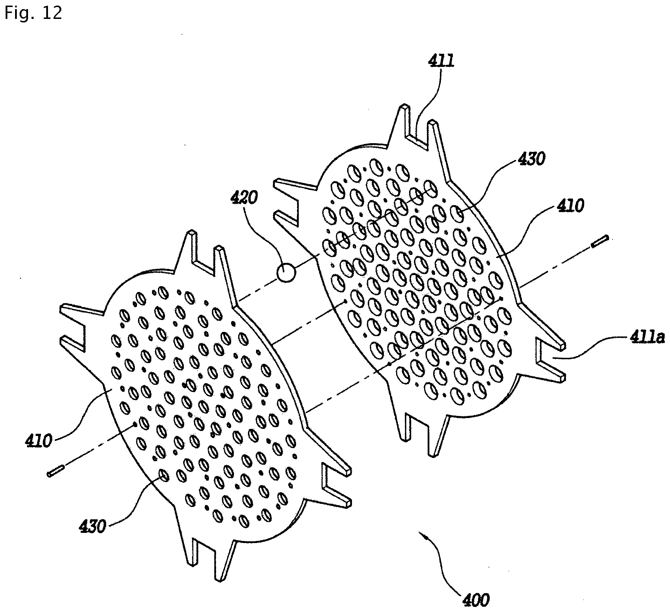

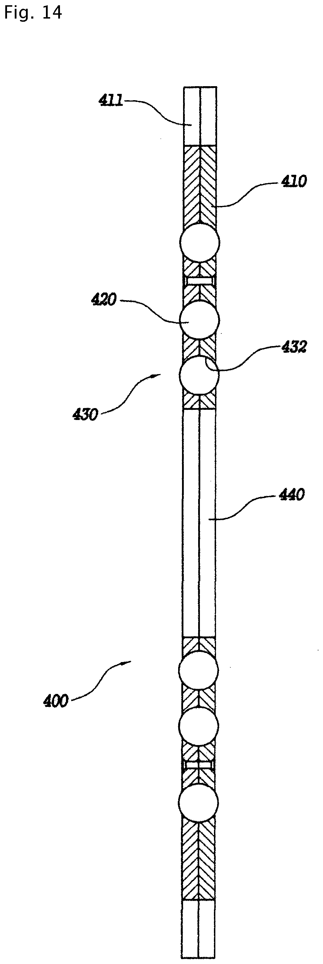

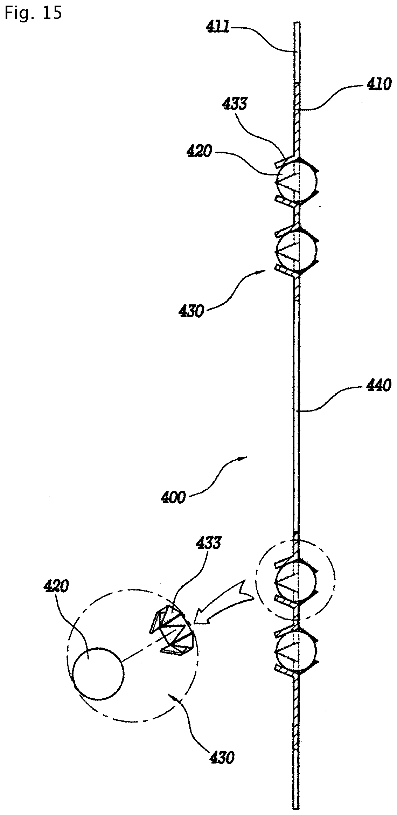

FIGS.12 and 14 show another example of the rolling support device 400 comprising two thick plates attached to each other to form a plate-shaped retainer cage 410. Pairs of half dome halves 432 facing each other are formed by cutting the two thick plates to form the accommodation holes 430. Furthermore, FIG.15 shows yet another example of the rolling support device 400 comprising a plate-shaped retainer cage 410 which is configured to comprise a plurality of separate accommodation holes 430, for receiving ceramic balls 420 therein, having opposing pairs of prongs 433 extending outwardly and downwardly in the opposite directions, which are made by cutting the retainer cage plate.

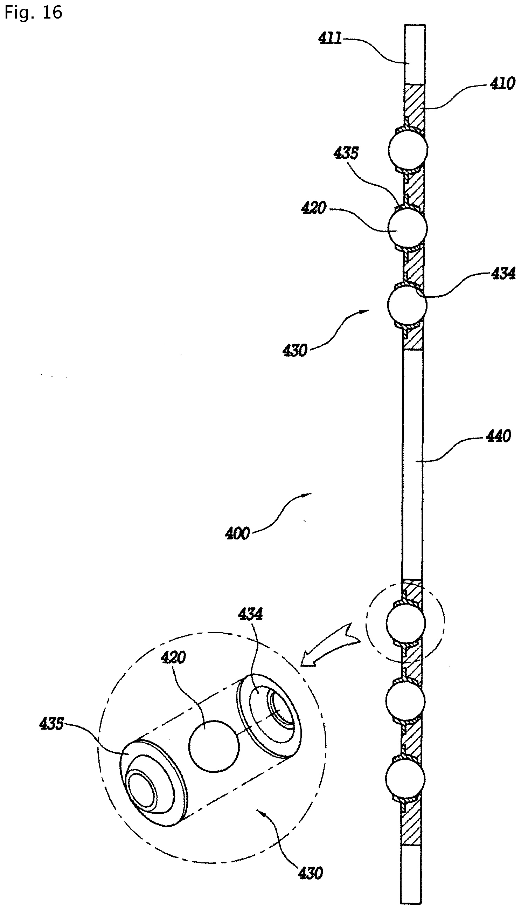

FIG.16 illustrates an alternative example of the rolling support device 400 comprising a plate-shaped retainer cage 410 which comprises one single plate provided with a plurality of openings 434 formed with arc-shaped recesses facing each other, and a plurality of pairs of holding caps 435 rollably holding a ceramic ball 420 therebetween, each of which is inserted and fixed in the respective hole. In other words, the above opening and a pair of holding caps fixed onto the opening make an accommodation hole 420.

Unlike the examples of FIGS.6, 11 and 12, the plate-shaped retainer cage 410 of the rolling support device 400, as shown in FIGS.13 to 16, may have a non-contact portion 440 in the center region thereof, with perforations but without any accommodation holes 430 formed thereon, so that the portion may have no contact with the main frame 300 and the orbiting scroll unit 200, thereby preventing damages caused by an excessive thermal expansion of the ceramic balls, to be possibly located on the center part of the plate-shaped retainer cage 410, which may be caused by the high temperature and high pressure working fluid.

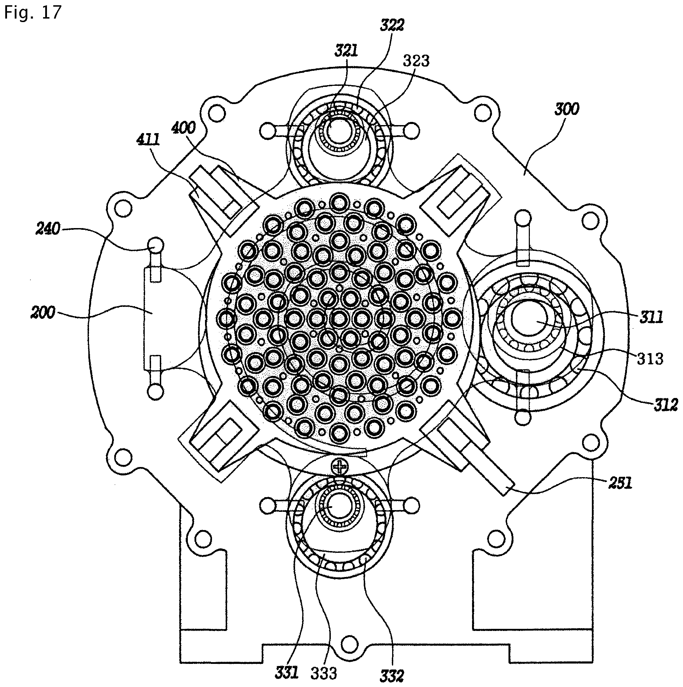

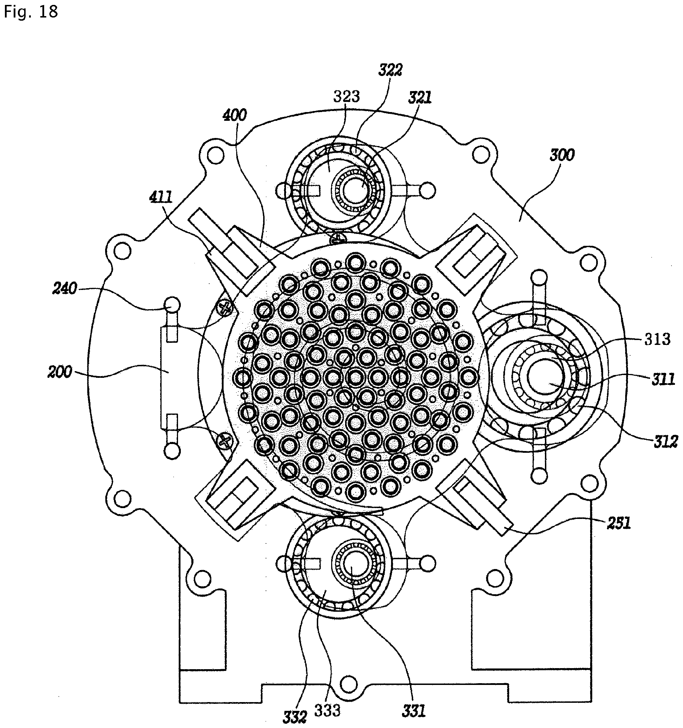

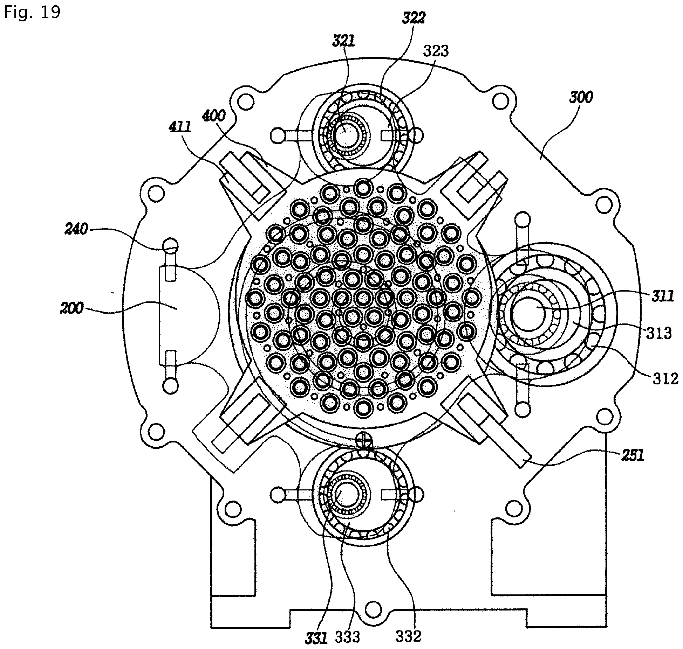

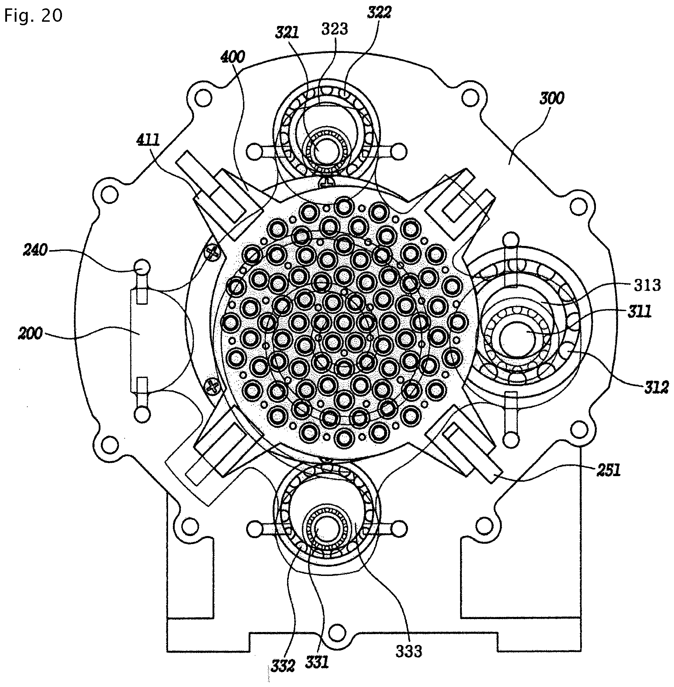

FIGS. 17 to 20 are side views showing the operating states of the expansion type scroll fluid machine according to the present invention.

As shown in FIGS.17 to 20, as the orbiting scroll unit 200 and the three eccentric shafts 311, 321 and 331 of the power transmission shaft 310 and the rotation preventing shafts 320 and 330 are rotated by 0°, 90°, 180°, and 270° in a counterclockwise direction, the positions of the rolling support device 400 and the coupled states between the guides 411 of the rolling support device 400 and the guide protrusions 251 of the orbiting scroll unit 200 are changed to allow the expansion type scroll fluid machine according to the present invention having the rolling support device 400 to be gently and smoothly operated, and further, the rolling support member 400 performs its own functions and achieves its operating effects.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention. In addition to aluminum, for example, the plate-shaped retainer cage of the rolling support member may be made of metal materials like stainless steel, plastic materials, ceramics and so on, and further, various kinds of balls made of hard materials may also be employed instead of the ceramic balls. That is, any kinds of the balls, which are typical for bearing, may be used without any limitation.

While the present invention has been described for the embodiments of the expansion type scroll fluid machines, but the above description of the invention applies to the compression type scroll fluid machine except that the inlet 111 port and the outlet port 112 of the fixed scroll unit 100 are changed to an outlet port and an inlet port, respectively and the power transmission shaft becomes a driving shaft driven by an external rotating force. Therefore, the scroll fluid machines according to the present invention can be applied to refrigerating machines using the compressed working fluid.

The foregoing description of the embodiments of the invention has been presented for the purpose of illustration; it is not intended to be exhaustive or to limit the invention to the embodiments or examples disclosed. Persons skilled in the relevant art can appreciate that many modifications and variations are possible in light of the above teachings within the scope of the invention. Particularly, it is intended that the scroll fluid machines including the rolling support device having the plate-shaped retainer cage and the balls (inclusive of replacements and equivalents thereof) made of hard materials are within the scope of the present invention. It is therefore appreciated that the scope of the invention is limited not by the detailed description, but only by the claims appended hereto.

## Claims

1. A scroll fluid machine having a rolling support device for the orbiting scroll unit comprising;
a fixed scroll unit having an inlet port 111 and an outlet port 112 for a working fluid and a fixed scroll wrap 120 formed on one surface of a base plate thereof;
an orbiting scroll unit 200 comprising an orbiting scroll wrap 210 formed on the center part of one surface of a base plate thereof, the orbiting scroll wrap being facingly engaged with the fixed scroll wrap 120 with a phase difference of 180° relative to the fixed scroll wrap 120, and three protruding wings 220a, 220b and 220c with a pair of opposite bearing housings having bearings 221b and 221c and an intermediate bearing housing having a bearing 221a therein;
a main frame 300 having a pair of opposite bearings 322 and 332 and one intermediate bearing 312 disposed corresponding to the three bearings 221b, 221c and 221a of the orbiting scroll unit 200, the front surface the main frame being coupled to the other surface of the base plate of the orbiting scroll unit 200;
a power transmission shaft 310 having a front end eccentric pin 311 rotatably coupled to the intermediate bearing 221a of the orbiting scroll unit 200 and a body 313 rotatably coupled to the intermediate bearing 312 of the main frame 300; and
two rotation preventing shafts 320 and 330, each having a front end eccentric pin 321 or 331 rotatably coupled to one of the two opposite bearings 221b and 221c of the orbiting scroll unit 200 and a body 323 or 333 rotatably coupled to one of the two opposite bearings 322 and the main frame 300;
further comprising;
a rolling support device 400 for the orbiting scroll unit 200 comprised of a plate-shaped retainer cage 410 having a plurality of accommodation holes 430 distributedly formed thereon and a plurality of balls 420 made of a hard material and rollably accommodated in the accommodation holes 430 of the plate-shaped retainer cage 410, and
a means for guiding rolling of the balls of the rolling support device 400 disposed between the orbiting scroll unit 200 and the main frame 300.

2. The scroll fluid machine of Claim 1, **characterized in**
**that** the plate-shaped retainer cage 410 of the rolling support device 400 comprises two thin plates fixedly attached to each other, pairs of arc-shaped ball caster housing halves 431 being formed to face each other by punch press machining or injection molding of each of the plates and the two attached thin plates being provided with a plurality of accommodation holes 430 formed by aligned and opposite pairs of arc-shaped ball caster housing halves 431.

3. The scroll fluid machine of Claim 1, **characterized in**
**that** the plate-shaped retainer cage 410 of the rolling support device 400 comprises two thin plates fixedly attached to each other, pairs of arc-shaped opposite housing halves 432 being formed to face each other by cutting process of each of the plates and the two attached plates being provided with a plurality of accommodation holes 430 formed by aligned and opposing pairs of arc-shaped housing halves 432.

4. The scroll fluid machine of Claim 1, **characterized in**
**that** the plate-shaped retainer cage 410 of the rolling support device 400 comprises a plate provided with a plurality of separate accommodation holes 430 having opposing pairs of prongs 433 formed by cutting and bending of the plate to extend outwardly and downwardly in the opposite directions.

5. The scroll fluid machine of Claim 1, **characterized in**
**that** the plate-shaped retainer cage 410 of the rolling support device 400 comprises a plate provided with a plurality of separate accommodation holes 430 formed by a plurality of openings 434, having arc-shaped recesses facing each other, and a plurality of pairs of holding caps 435 fitted to the recesses of the openings 434.

6. The scroll fluid machine of Claim 1, **characterized in**
**that** the center part of the plate-shaped retainer cage 410 of the rolling support device 400 is not formed with a perforation or an accommodation hole, being left as a noncontact part 440.

7. The scroll fluid machine of any of Claims 1 to 6, **characterized in**
**that** the means for guiding the balls' rolling of the rolling support device 400 comprises four guides 411 having guide grooves 411a formed along the outer circumference of the plate-shaped retainer cage 410 in its diametric direction; four guide protrusions 251 formed along the outer circumference of the orbiting scroll unit 200 and each having a through hole 251a respectively formed on the positions corresponding to the guide grooves 411a in a perpendicular direction to the guide grooves 411a, the guide protrusions being inserted in the guide grooves 411a of the four guides 411 to be reciprocated toward the outer circumference of the plate-shaped retainer cage 410 from the center thereof; four rods 252 inserted in the through holes 251a of the four guide protrusions 251; and eight supports 253 disposed on the front surface of the main frame 300 to support both ends of each of the four rods 252.

8. The scroll fluid machine of Claim 7, **characterized in**
**that** the four guides 411 are arranged to have a right angle with each other toward the center of the plate-shaped retainer cage 410, making a cross by two lines connecting the opposite guides.

9. The scroll fluid machine of any of Claims 1 to 6, **characterized in**
**that** the means for guiding rolling of the balls of the rolling support means 400 comprises two opposite guides 411 protruding from the outer circumference of the plate-shaped retainer cage 410 and having a bearing therein, and guide shafts 321a and 331a formed between the bodies 323 and 333 and the eccentric pins 321 and 331 of the rotation preventing shafts 320 and 330 to be axially fixed to the bearings of the two guides 411.

10. The scroll fluid machine of any of Claims 1 to 6, **characterized in**
**that** the bearings 221b and 221c of the orbiting scroll unit 200 is disposed to have a right angle with a line connecting the centroid of the orbiting of the orbiting scroll unit and the center of the bearing 221a.

11. The scroll fluid machine of Claim 7, **characterized in**
**that** the bearings 221b and 221c of the orbiting scroll unit 200 is disposed to have a right angle with a line connecting the centroid of the orbiting of the orbiting scroll unit and the center of the bearing 221a.

12. The scroll fluid machine of Claim 9, **characterized in**
**that** the bearings 221b and 221c of the orbiting scroll unit 200 is disposed to have a right angle with a line connecting the centroid of the orbiting of the orbiting scroll unit and the center of the bearing 221a.

13. The scroll fluid machine of any of Claims 1 to 6, **characterized in**
**that** the scroll fluid machine is an expansion type scroll fluid machine, the fixed scroll unit 100, the orbiting scroll unit 200 and the main frame 300 of which are made of stainless steel such as SUS 303F, SUS 430F, and the like, being appropriate for casting thereof.

14. The scroll fluid machine of Claim 7, **characterized in**
**that** the scroll fluid machine is an expansion type scroll fluid machine, the fixed scroll unit 100, the orbiting scroll unit 200 and the main frame 300 of which are made of stainless steel such as SUS 303F, SUS 430F, and the like, being appropriate for casting thereof.

15. The scroll fluid machine of Claim 9, **characterized in**
**that** the scroll fluid machine is an expansion type scroll fluid machine, the fixed scroll unit 100, the orbiting scroll unit 200 and the main frame 300 of which are made of stainless steel such as SUS 303F, SUS 430F, and the like, being appropriate for casting thereof.

16. The scroll fluid machine of any of Claims 1 to 6, **characterized in**
**that** the machine further comprises a pair of circular mirror surfaced racing plates 270 and 370 disposed between the rolling support device 400 and the orbiting scroll unit 200 and between the rolling support device 400 and the main frame 300, respectively.

17. The scroll fluid machine of Claim 7, **characterized in**
**that** the machine further comprises a pair of circular mirror surfaced racing plates 270 and 370 disposed between the rolling support device 400 and the orbiting scroll unit 200 and between the rolling support device 400 and the main frame 300, respectively.

18. The scroll fluid machine of Claim 9, **characterized in**
**that** the machine further comprises a pair of circular mirror surfaced racing plates 270 and 370 disposed between the rolling support device 400 and the orbiting scroll unit 200 and between the rolling support device 400 and the main frame 300, respectively.

19. The scroll fluid machine of any of Claims 1 to 6, **characterized in**
**that** the machine further comprises a plurality of tension springs with both ends thereof fixed to the outer circumference of the base plate of the orbiting scroll unit 200 and the main frame 300 so as to fix the orbiting scroll unit 200 and the main frame 300 tightly with each other.

20. The scroll fluid machine of Claim 7, **characterized in**
**that** the machine further comprises a plurality of tension springs with both ends thereof fixed to the outer circumference of the base plate of the orbiting scroll unit 200 and the main frame 300 so as to fix the orbiting scroll unit 200 and the main frame 300 tightly with each other.

21. The scroll fluid machine of Claim 9, **characterized in**
**that** the machine further comprises a plurality of tension springs 500 with both ends thereof fixed to the outer circumference of the base plate of the orbiting scroll unit 200 and the main frame 300 so as to fix the orbiting scroll unit 200 and the main frame 300 tightly with each other.

22. The scroll fluid machine of Claim 19, **characterized in**
**that** both ends of each of the tension springs 500 are fixed to a spring hook bracket 250 formed on the outer circumference of the base plate of the orbiting scroll unit 200 and to a spring hook bolt 350 fastened to a bolt hole formed on the main frame 300 facing the rolling support device 400, respectively.

23. The scroll fluid machine of Claim 20, **characterized in**
**that** both ends of each of the tension springs 500 are fixed to a spring hook bracket 250 formed on the outer circumference of the base plate of the orbiting scroll unit 200 and to a spring hook bolt 350 fastened to a bolt hole formed on the main frame 300 facing the rolling support device 400, respectively.

24. The scroll fluid machine of Claim 21, **characterized in**
**that** both ends of each of the tension springs 500 are fixed to a spring hook bracket 250 formed on the outer circumference of the base plate of the orbiting scroll unit 200 and to a spring hook bolt 350 fastened to a bolt hole formed on the main frame 300 facing the rolling support device 400, respectively.

25. The scroll fluid machine of Claim 7, **characterized in**
**that** two coil springs 254 are fitted to the outer surface of each rod 252 to bring both ends thereof into contact with the guide protrusions 251 and the supports 253.

26. The scroll fluid machine of Claim 8, **characterized in**
**that** two coil springs 254 are fitted to the outer surface of each rod 252 to bring both ends thereof into contact with the guide protrusions 251 and the supports 253.

27. The scroll fluid machine of Claim 11, **characterized in**
**that** two coil springs 254 are fitted to the outer surface of each rod 252 to bring both ends thereof into contact with the guide protrusions 251 and the supports 253.
